Europäisches Patentamt

European Patent Office

Office européen des brevets

(19)

(11) Veröffentlichungsnummer: **0 330 704 B1**

(12) # EUROPÄISCHE PATENTSCHRIFT

(45) Veröffentlichungstag der Patentschrift: **14.04.93**

(21) Anmeldenummer: **88102966.4**

(22) Anmeldetag: **27.02.88**

(51) Int. Cl.⁵: **B01D 45/06**

(54) **Flüssigkeitsabscheider.**

(43) Veröffentlichungstag der Anmeldung:
**06.09.89 Patentblatt 89/36**

(45) Bekanntmachung des Hinweises auf die
Patenterteilung:
**14.04.93 Patentblatt 93/15**

(84) Benannte Vertragsstaaten:
**AT BE CH DE ES FR GB GR IT LI LU NL SE**

(56) Entgegenhaltungen:
**BE-A- 729 208**      **DE-A- 2 302 636**
**DE-B- 1 913 282**      **DE-C- 257 368**
**DE-U- 1 310 913**      **GB-A- 1 089 721**
**GB-A- 1 420 869**      **US-A- 3 813 855**

(73) Patentinhaber: **VIA Gesellschaft für Verfahrenstechnik mbH**
**Heerdter Lohweg 63-71**
**W-4000 Düsseldorf 11(DE)**

(72) Erfinder: **Prümm, Bernhard, Dr.-Ing.**
**Gerberstrasse 64-66**
**W-4060 Viersen 1(DE)**

(74) Vertreter: **Müller, Gerd et al
Patentanwälte HEMMERICH-
MÜLLER-GROSSE-POLLMEIER-MEY-VALENTI-
N Hammerstrasse 2
W-5900 Siegen 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Flüssigkeitsabscheider zum Abscheiden von in einer Zwei-Phasen-Strömung mitgeführten Flüssigkeits- und Feststoffanteilen, bei dem die Strömung durch einen aus senkrecht nebeneinander angeordneten, wellenförmigen Profilen mit Fangtaschen bestehenden Kanal hindurchgeleitet wird, wobei die Profile einerseits von einer Bodenplatte und andererseits von einer Deckelplatte begrenzt sind und wobei die Bodenplatte Durchbrüche aufweist, die in einen an ihre Unterseite angrenzenden Sammelraum münden.

Ein Flüssigkeitsabscheider dieser Art ist offenbart in der DE-C-257 368. Hierbei stützen sich die wellenförmigen Profile mit ihrem unteren Ende auf einem Bodensieb ab, welches eine gleichmäßig über seine gesamte Fläche verteilt angeordnete Lochung aufweist.

Nachteilig bei dieser Bauart eines Flüssigkeitsabscheiders ist, daß dessen Arbeitsweise, insbesondere bei hohen Strömungsgeschwindigkeiten der Zwei-Phasen-Strömung und somit bei entsprechend starkem Druckabfall zwischen der Eintritts- und der Austrittsseite, nachhaltig beeinträchtigt wird. Es stellen sich nämlich in großem Umfang unerwünschte Nebenströmungen zwischen dem Abscheiderraum und dem Sammelraum ein, welche in der Nähe des Eintritts aus dem Abscheiderraum in Richtung zum Sammelraum hinwirken, während sie zum Austritt hin, vom Sammelraum her in den Abscheiderraum auftreten.

Es hat sich gezeigt, daß unter der Einwirkung dieser Nebenströmungen der einwandfreie Abfluß des Kondensates behindert werden kann. Die gleichen Gesichtspunkte treffen auch für einen Flüssigkeitsabscheider zu, welcher in einer Druckschrift der Firma Munters Euroform, Systerfeldstraße 65, D-5100 Aachen, mit der Bezeichnung "TS5-Tropfenabscheider" offenbart wird.

Aus der Darstellung dieses Prospektes ergibt sich, daß zahlreiche aus senkrecht nebeneinander angeordneten, wellenförmigen Profilen mit Fangtaschen bestehende Leitbleche benutzt sind, die an ihrer einen seitlichen Stirnkante einen Eintritt und an ihrer anderer seitlichen Stirnkante einen Austritt für die Zwei-Phasen-Strömung bilden.

Von einem die Leitbleche umschließenden Gehäuse ist eine geschlossene rechte Seitenwand zu erkennen, außerdem ein nach oben hin offenes rahmenartiges Gehäuseteil sowie ein unteres, wannenartiges Gehäuseteil, in das offensichtlich das aufgefangene Kondensat abfließen kann. Der Sammelraum ist mit einem Anschlußstutzen versehen, an dem ein Kondensatableiter montiert werden kann.

Wie die Zwei-Phasen-Strömung dem Abscheider zugeführt wird und wie die behandelte Strömung dann wieder abgeführt wird, ergibt sich nicht aus dem Prospekt.

Obwohl es aus diesem Prospekt nicht hervorgeht, wird davon ausgegangen, daß die einzelnen Leitbleche soweit in den Sammelraum hineinreichen, daß sich am Boden dieses Sammelraums ein "Bodenbach" ausbilden kann, in dem das Kondensat in Richtung auf den Abzugsstutzen frei fließen kann. Dieser Bodenbach oder diese Bodenströmung ist im vorliegenden Falle insofern unproblematisch, als der Abstand des Bodens des Sammelraums vom Bereich der Zwei-Phasen-Strömung verhältnismäßig groß ist. Das bedeutet, daß der Einfluß dieser Zwei-Phasen-Strömung auf das Fließen der Bodenströmung verhältnismäßig gering ist.

Der große Abstand zwischen der Bodenströmung und dem Flüssigkeitsspiegel der Bodenströmung hat den Vorteil, daß ein Mitreißen von Tropfen durch die Strömung und damit ein unsauberes Flüssigkeitsabscheiden weitgehend vermieden werden kann, insbesondere dann, wenn die Strömungsgeschwindigkeit und der Druckabfall der Zwei-Phasen-Strömung nicht allzu hoch sind.

Bei Druckluftanwendungen treten jedoch Probleme auf. Zum einen ist es günstig, Flüssigkeitsabscheider, die unter Druck stehen, möglichst klein zu machen, um so die Druckkräfte zu vermindern. Das bedeutet, daß Abstände zwischen dem Flüssigkeitsspiegel und der Zone, in der die Zwei-Phasen-Strömung fließt, möglichst klein bleiben sollten. Außerdem ist bei Druckluft mit wesentlich höheren Strömungsgeschwindigkeiten zu rechnen, weil der zulässige Druckabfall bei Druckluftanwendungen wesentlich größer sein kann als bei Zwei-Phasen-Strömungen, die nur geringe absolute Drücke besitzen und daher auch nur geringe Druckunterschiede vertragen. Bei hohen Strömungsgeschwindigkeiten und geringer Entfernung zwischen der Zwei-Phasen-Strömung und dem Flüssigkeitsspiegel der abgeschiedenen Flüssigkeit kann es daher zu Wellenbildung an der Kondensatoberfläche, was wiederum zu Mitreißeffekten am Boden des Flüssigkeitsabscheiders und damit zu Beeinträchtigungen bei der Kondensatabscheidung führt.

Ähnliche Probleme treten am Deckel des Flüssigkeitsabscheiders dann auf, wenn, wie üblich, ein einfaches Abdeckblech die oberen Enden der Profile abschließt. An der dadurch gebildeten Deckenfläche kann sich nämlich ein Flüssigkeitsfilm bilden, der zu einer Flüssigkeitsströmung in Richtung und parallel zur Zwei-Phasen-Strömung führt, welche Flüssigkeitsströmung von den Fangtaschen der Leitbleche nicht aufgehalten wird und daher ebenfalls die Flüssigkeitsabscheidung beeinträchtigt.

Die aus dem Prospekt bekannte Einrichtung ist zudem sehr aufwendig in der Herstellung, dies vor allem wegen der konstruktionsbedingt erforderlichen verhältnismäßig großen Abmessungen. Durch die Notwendigkeit, den Kondensatsammelraum mit großem Abstand zum Zwei-Phasen-Strömungsbereich anzuordnen, ergibt sich auch, daß der Flüssigkeitsabscheider wesentlich größer ist als seine freie Einlauffläche.

Aufgabe der Erfindung ist es, einen Flüssigkeitsabscheider der eingangs genannten Art zu schaffen, der die oben genannten Nachteile nicht mehr aufweist und insbesondere eine Größe erhält, die nur nach unwesentlich größer ist als die freie Einlauffläche, ohne daß dadurch die Flüssigkeitsabscheidung leidet. Insbesondere soll der Flüssigkeitsabscheider auch für Druckluftanwendungen mit verhältnismäßig hohen Durchströmungsgeschwindigkeiten geeignet sein. Zudem soll die Herstellung des Flüssigkeitsabscheiders wesentlich vereinfacht und verbilligt werden.

Gelöst wird die gestellte Aufgabe mit den Kennzeichnungsmerkmalen des Anspruchs 1, nämlich dadurch, daß die Durchbrüche in der Bodenplatte lediglich im Bereich der Fangtaschen vorgesehen sind.

Durch diese Maßnahmen wird der Flüssigkeitsspiegel des Kondensats im Sammelraum von der Zwei-Phasen-Strömung und dessen Mitreißkräften abgetrennt. Der effektive Abstand zwischen diesem Flüssigkeitsspiegel und der Zwei-Phasen-Strömung kann daher stark verringert werden, so daß der Gesamtquerschnitt des Flüssigkeitsabscheiders nun nur noch unwesentlich größer ist als die tatsächliche freie Einlauffläche für die Zwei-Phasen-Strömung. Hinzu kommt, daß die Halterung der Fangtaschen und Leitbleche viel stabiler gemacht werden kann, daß sich insbesondere Fangtaschen und Leitbleche sowie die diese Teile umgebenden Gehäuseteile gegenseitig abstützen und dadurch besonders druckfest und stabil werden. Dadurch können andere stabilisierende Maßnahmen entfallen, was die Herstellungskosten erniedrigt.

Auch erwächst der Vorteil, daß der Ausbildung unerwünschter Nebenströmungen zwischen Abscheiderraum und Sammelraum mit einfachen Mitteln entgegengewirkt wird, ohne daß sich eine Beeinträchtigung des Kondensatabflusses in den Sammelraum einstellen kann. Das ist besonders wichtig für Flüssigkeitsabscheider, die unter hohem Druck von Preßluft stehen.

Durch DE-U-1 310 913 ist zwar ein Flüssigkeitsabscheider bekannt, bei dem auf einer Bodenplatte senkrecht nebeneinander im Querschnitt etwa V- oder U-förmige Profile angeordnet sind, die in mehreren hintereinanderliegenden Reihen jeweils auf Lücke zueinander gesetzt sind und mit ihren der Strömung entgegengerichteten, offenen Seiten einzelne Fangtaschen eingrenzen. Bei diesen Flüssigkeitsabscheidern sind in der Bodenplatte Durchbrüche lediglich im Bereich der Fangtaschen vorgesehen.

Durch die auf Lücke gegeneinander versetzten Reihen von Einzel-Profilen wird jedoch innerhalb dieses bekannten Flüssigkeitsabscheiders ein hoher Strömungswiderstand erzeugt, der einen unerwünscht starken Druckabfall zwischen Eintritt und Austritt des Flüssigkeitsabscheiders nach sich zieht.

Eine weitere Vereinfachung insbesondere hinsichtlich der Abdichtmaßnahmen ergibt sich, wenn gemäß einer Weiterbildung der Erfindung Bodenplatte, Deckelplatte und (von den Profilen gebildete) Seitenwände von einem weiteren, ggf. auch den Sammelraum bildenden Druckgehäuse umschlossen sind.

Ein weiterer Vorteil der Konstruktion ist der, daß hier die Möglichkeit besteht, gemäß einer noch anderen Weiterbildung der Erfindung in den zwischen den Profilflächen verbleibenden Raum vorspringende Schikanen anzuordnen. Derartige Schikanen können nicht nur an der Bodenfläche, sondern auch an der bei dieser Konstruktion sich ergebenden Deckelfläche vorgesehen sein und die Form von die Strömungsrichtung schneidenden Vorsprüngen haben, wobei wegen der meandrierenden (in Windungen verlaufenden) Form des Strömungsweges zwischen den Profilen derartige, z. B. Zwischenwände bildende Vorsprünge entweder parallel oder senkrecht zur Achse des Flüssigkeitsabscheiders verlaufen können.

Bei hohen Strömungsgeschwindigkeiten bildet sich ein Druckgefälle zwischen dem Eintritt und dem Austritt, welches Druckgefälle bei den nahe dem Austritt gelegenen Durchbrüchen ein das Abfließen von Kondensat behindern kann, weil eine entgegen der Abflußrichtung für das Kondensat verlaufende Strömung aus dem Sammelraum heraus in den Kanalraum führt. Durch Beseitigung dieses Effektes läßt sich die Qualität der Flüssigkeitsabscheidung noch weiter erhöhen. Zu diesem Zweck könnte beispielsweise mittels an den Durchbrüchen angeordneten, U-Form aufweisenden Überlaufstutzen die genannte Gegenströmung unterbrochen werden, ohne daß die Flüssigkeitsableitung behindert wird. Möglich wird dies dadurch, daß durch die siphonartige Ausbildung eine Überlaufflüssigkeitssäule entsteht, die dem Strömungsdruck angepaßt werden kann und diesem entgegenwirkt.

Denkbar sind auch andere Maßnahmen, um diese Behinderung des Abfließens des Kondensats durch die nahe dem Austritt angeordneten Durchbrüche zu beseitigen. So könnte gemäß einer noch anderen Ausführungsform das den Sammelraum bildende Druckgehäuse einen Rohranschluß erhalten, der über eine Rohrverbindung mit einem anderen Rohranschluß in Verbindung steht, der an einer Stelle des am Austritt beginnenden Anschlußrohres angebracht ist, welche Stelle vom Austritt aus dem Flüssigkeitsabscheider soweit entfernt ist, daß das durch Strömungswiderstände in diesem Rohrabschnitt entstehende Druckgefälle gleich oder größer ist als das Druckgefälle zwischen den Durchbrüchen am Beginn des Strömungskanals und den Durchbrüchen am Ende des Strömungskanals. Im Sammelraum wird dadurch ein solcher Unterdruck erzeugt, daß selbst bei den Durchbrüchen nahe dem Austrittsende des Kondensatabscheiders zumindest kein behindernder Strömungsdruck entsteht, möglicherweise sogar ein den Ausfließvorgang unterstützender Strömungsdruck.

Bei verhältnismäßig geringen Strömungsgeschwindigkeiten kann es sogar ausreichend sein, gemäß einer noch anderen Ausführungsform hinter dem Austritt einen in den Strömungskanal sich öffnenden Nebenschlußdurchbruch vorzusehen, der einen Querschnitt besitzt, der größer ist als die Summe der Querschnitte aller in den Sammelraum sich öffnender Kondensatableitdurchbrüche. Diese Konstruktion hat den Vorteil, daß die Anordnung einer zusätzlichen Rohrleitung vom Kondensatabscheider zu dem Anschlußrohr, wie er bei der vorstehend geschilderten Ausführungsform notwendig ist, hier entfällt.

Die Profile können aus Metall bestehen, es handelt sich vorzugsweise um Profile zum Aufbau von Fangrillenabscheidern, die aus Aluminium bestehen, während die den Strömungskanal ansonsten begrenzenden Bauteile aus Metall oder aus Kunststoff, vorzugsweise aus grauem Polyvinylchlorid (PVC) gebildet sein können, was die Herstellungskosten drastisch reduziert.

Zur Vereinfachung der Herstellung und zur Erlangung von möglichst exakten Strömungsverhältnissen ist es günstig, wenn die Zwischenwände in den Einschnitten der Profile weitgehend gasdicht eingepresst sind. Auf besondere Abdichtmaßnahmen kann in diesem Fall verzichtet werden. Die Profilkanten, die an Boden- und Deckelwand anstoßen, lassen sich dagegen in einfacher Weise mit diesen Wänden verkleben, indem die Kanten in ein Kleberbad einige Millimeter tief eingetaucht und dann wieder herausgezogen werden und dann auf die Boden- bzw. Deckelwand aufgesetzt werden, wonach man den Kleber aushärten läßt.

In ähnlicher Weise lassen sich die Zwischenwände mit ihren an der Boden- bzw. Deckelwand angrenzenden Stirnflächen mit der jeweiligen Wand verkleben.

Der Strömungskanal ist vorzugsweise am Anfang (Eintritt) und ggf. auch am Ende (Austritt) so geformt, daß er einen Trichter bildet, der wiederum in ein Anschlußrohr oder dgl. mündet, wobei der Strömungskanal nur einen geringfügig größeren Strömungsquerschnitt aufweisen sollte, als der Trichter und das Anschlußrohr. Insbesondere im Bereich der Eintrittsöffnung ist es dabei von Vorteil, wenn der Trichter einen inneren Konus bildet, der in den freien Durchtrittsquerschnitt des von den Profilen gebildeten Strömungskanals übergeht. Auf diese Weise wird einerseits verhindert, daß bei Hinterschneidungen Stellen mit Strömungsabriß entstehen, was eine starke Verwirbelung und Mitreißeffekte ergibt, andererseits werden auch den Strömungswiderstand erhöhende Hindernisse im Strömungsbereich selbst vermieden. Aus dem gleichen Grunde ist es günstig, wenn der Trichter im Bereich der Eintrittsöffnung einen Diffusor darstellt, der einen inneren Konus bildet, dessen Konuswinkel bezüglich der Trichterachse einen Winkel $\alpha$ nicht überschreitet, welcher Winkel $\alpha$ so gewählt ist, daß die Diffusion gerade noch keinen Strömungsabriß bewirkt.

Wegen des häufig sehr hohen Druckes von Pressluft, die hier vorzugsweise behandelt werden soll, ist es günstig, wenn das Druckgehäuse aus Stahlblech besteht, einen vorzugsweise runden Querschnitt aufweist und am Eintritt und am Austritt in eine Klöpperbodenwand übergeht, die mit dem ebenfalls aus Stahlblech oder Stahlrohr bestehenden Anschlußrohren dicht verschweißt ist. Damit wird die Hauptdruckbelastung von Stahlblech übernommen, während die innerhalb dieses Stahlblechgehäuses angeordneten Kunststoff bzw. Aluminiumbauteile wesentlich geringeren Drücken ausgesetzt sind.

Insbesondere kann auch der innerhalb dieses Druckgehäuses angeordnete Trichter aus grauem PVC gespritzt oder tiefgezogen sein und einen Flansch bilden, der mit den angrenzenden Stirnkanten von Boden- und Deckelwand bzw. Vorsprungsleisten und Profilen verklebt ist. Dieses letztgenannte Merkmal gibt der Gesamtkonstruktion, soweit sie nur aus Kunststoff und den Metallprofilen besteht, eine außerordentliche innere Steifigkeit bei trotzdem sehr preiswerter Herstellung.

Die Erfindung wird nachfolgend anhand von Ausführungsbeispielen näher erläutert, die in den Zeichnungen dargestellt sind.

Es zeigt:

Fig. 1 in einer schematisierten Seitenansicht einen erfindungsgemäß ausgebildeten Flüssigkeitsabscheider gemäß einer ersten und zweiten Ausführungsform der Erfindung;

Fig. 2 eine perspektivische Seitenansicht einer anderen, geschraubten Ausführungsform des erfindungsgemäßen Flüssigkeitsabscheiders mit quer zur Abscheiderachse verlaufenden Boden- und Deckelschikanen;

Fig. 3 eine Seitenansicht der Ausführungsform gemäß Fig. 2;

Fig. 4 eine Stirnansicht der Ausführungsform gemäß Fig. 2;

Fig. 5 eine Ansicht auf eine Befestigungsplatte des in Fig. 2 dargestellten Abscheiders;

Fig. 6 eine Ansicht von oben auf die Bodenplatte des Abscheiders gemäß Fig. 2 mit angedeuteten Profilen;

Fig. 7 eine Seitenansicht der in Fig. 6 dargestellten Bodenplatte;

Fig. 8 eine Herauszeichnung der Profile der Fig. 6;

Fig. 9 eine Darstellung von Siphoneinrichtungen, wie sie bei einer Ausführungsform gemäß Fig. 1 oder 2 eingesetzt werden kann;

Fig. 10 eine perspektivische Seitenansicht ähnlich der Fig. 2 von einer geklebten Ausführungsform des erfindungsgemäßen Flüssigkeitsabscheiders mit längs zur Abscheiderachse verlaufenden Boden- und Deckelschikanen;

Fig. 11 eine Ansicht von oben auf die Bodenplatte des Abscheiders gemäß Fig. 10 mit angedeuteten Profilen;

Fig. 12 eine Seitenansicht der Anordnung gemäß Fig. 11;

Fig. 13 eine axiale Schnittansicht eines am Eintrittsende anzubringenden Trichters mit einem Konuswinkel, bei dem eine Abrißerscheinung noch nicht auftritt; und

Fig. 14 schematisch eine Darstellung der Eintrittsöffnungsfläche in Abhängigkeit von der Anzahl der verwendeten Profile.

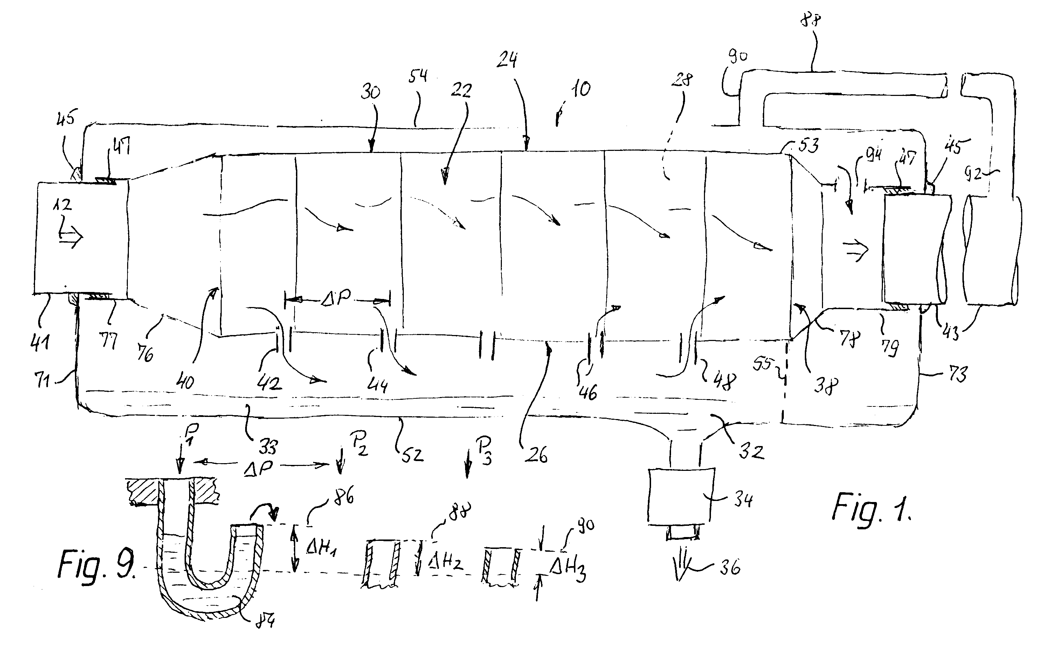

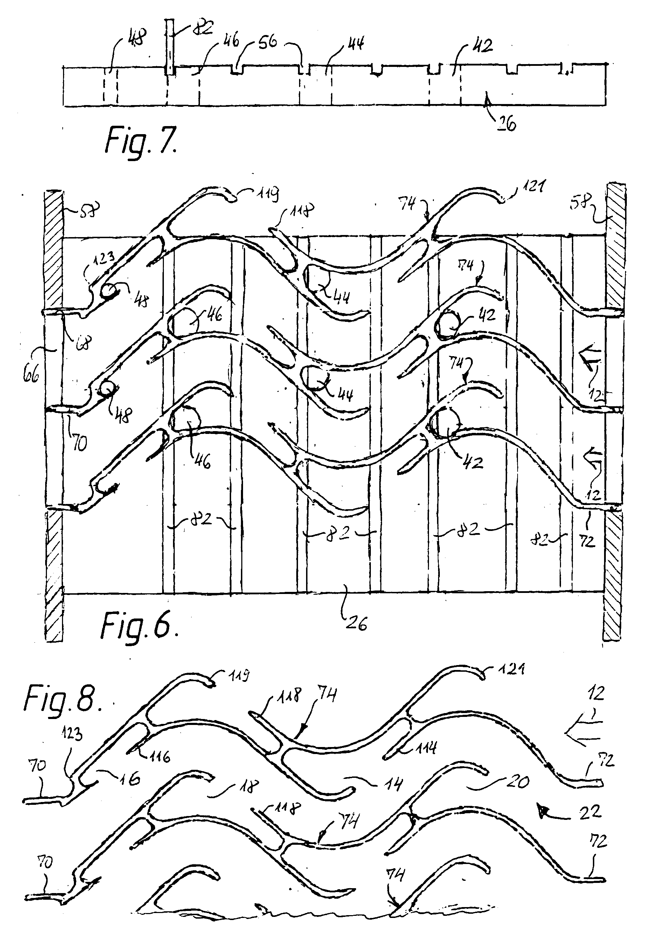

In Fig. 1 ist in einer schematischen Seitenansicht ein Flüssigkeitsabscheider 10 dargestellt, der zum Abscheiden von in einer Zwei-Phasen-Strömung 12 mitgeführten Flüssigkeitsanteilen dient. Beispielsweise muß Druckluft von Wasser- und Ölanteilen, die beispielsweise in Form von feinen Tröpfchen mitgerissen werden, weitgehend befreit werden, da diese Bestandteile bei der späteren Verwendung der Druckluft sehr stören können. Bei der hier dargestellten Art der Flüssigkeitsabscheidung wird die Zwei-Phasen-Strömung, z. B. Druckluft, durch einen mit Fangtaschen oder Fangrillen 14, 16, 18, 20 (siehe Fig. 8) versehenen Kanal 22 hindurchgeleitet, wobei diese Fangtaschen (dargestellt sind vier, es können aber auch weniger oder mehr sein) ihre Auffangwirkung infolge der größeren Trägheit der flüssigen Phase (oder außerdem enthaltener Feststoffpartikel) gegenüber der gasförmigen Phase erhalten. Einigen der Fangtaschen ist bei der hier dargestellten Ausführungsform jeweils noch jeweils ein Leitblech 114, 116, 118 vorgelagert, welche Leitbleche an ihren Enden eine Ablösekante zum Einleiten der Flüssigkeit in die Fangtasche aufweisen. Außerdem ergeben diese Leitbleche in vorteilhafter Weise eine Vergleichmäßigung des Durchtrittsquerschnitts für die Zwei-Phasen-Strömung 12 durch den Kanal 22 des Flüssigkeitsabscheiders 10 und verringern somit den Strömungswiderstand der Einrichtung. Wie aus der Fig. 1 deutlich hervorgeht, wird der Kanal 22 von einem Gehäuse 24 umschlossen, das einen Boden 26, zwei Seitenwände 28 und einen Deckel 30 aufweist. Unterhalb des Bodens befindet sich ein Sammelraum 32 für abgeschiedene Flüssigkeit 33, die über einen Kondensatableiter 34 nach Bedarf oder in regelmäßigen Zeitabständen aus dem Sammelraum 32 abgeleitet werden kann, siehe Pfeil 36. Die von den Flüssigkeitsanteilen weitgehend befreite Strömung 12 tritt bei 38 aus dem Flüssigkeitsabscheider 10 wieder aus.

Die Darstellung der Fig. 1 soll außerdem verdeutlichen, daß die Querschnittsfläche, die die Zwei-Phasen-Strömung 12 am Eintritt 40 des Flüssigkeitsabscheiders 10 vorfindet, nur unwesentlich größer ist als der Querschnitt des Zuflußrohres 41. Ähnliches gilt für den Querschnitt des Kanals 22, der sich zwischen Deckel 30, Seitenwänden 28 und Boden 26 bildet, und dem Querschnitt des Austritts 38, der im wesentlichen dem des Eintritts 40 entspricht.

Wie noch erläutert werden wird, dienen Boden 26 und Deckel 30 der Halterung der Profile mit den Fangtaschen, wobei der Boden 26 im Bereich der Fangtaschen 14, 16, 18, 20 Durchbrüche 42, 44, 46, 48 gemäß Fig. 1 und Fig. 6 aufweist. Die einzelnen Durchbrüche könnten über entsprechende separate Leitungen mit einem unterhalb des Bodens angeordneten gemeinsamen Sammelraum, der beispielsweise in einem Kondensatableiter 34 vorgesehen sein könnte, verbunden sein. Bei der in Fig. 1 dargestellten Ausführungsform ist jedoch unterhalb des Bodens 26 eine weitere Bodenwand 52 vorgesehen, die, was konstruktiv günstig ist, mit hier nicht dargestellten Seitenwänden und einer jenseits des Deckels 30 liegenden weiteren Deckelwand 54 eine druckfeste Einheit in Form eines Umfanggehäuses bilden kann.

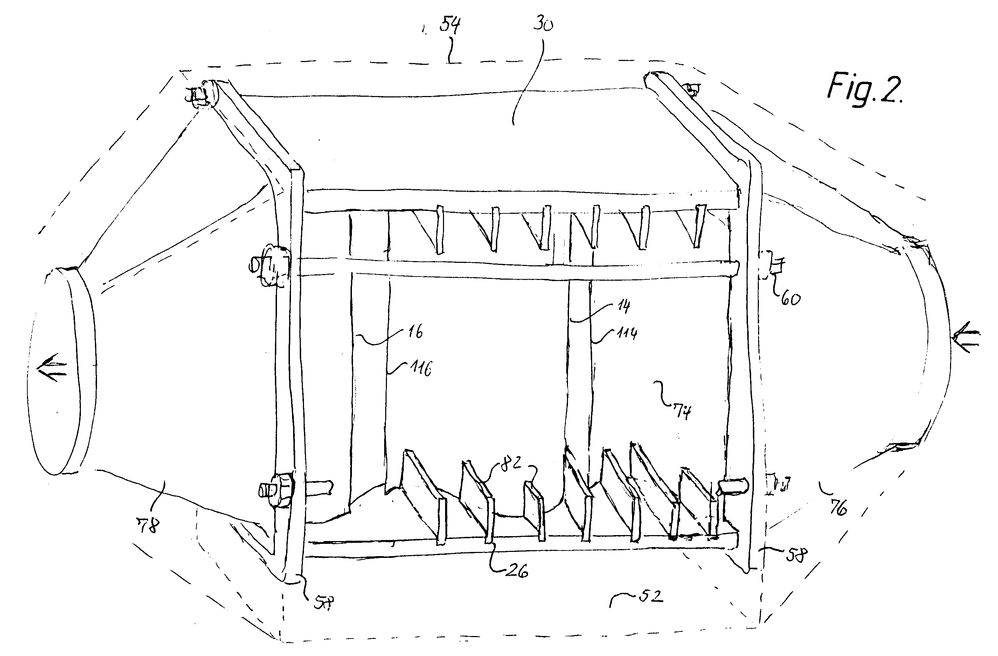

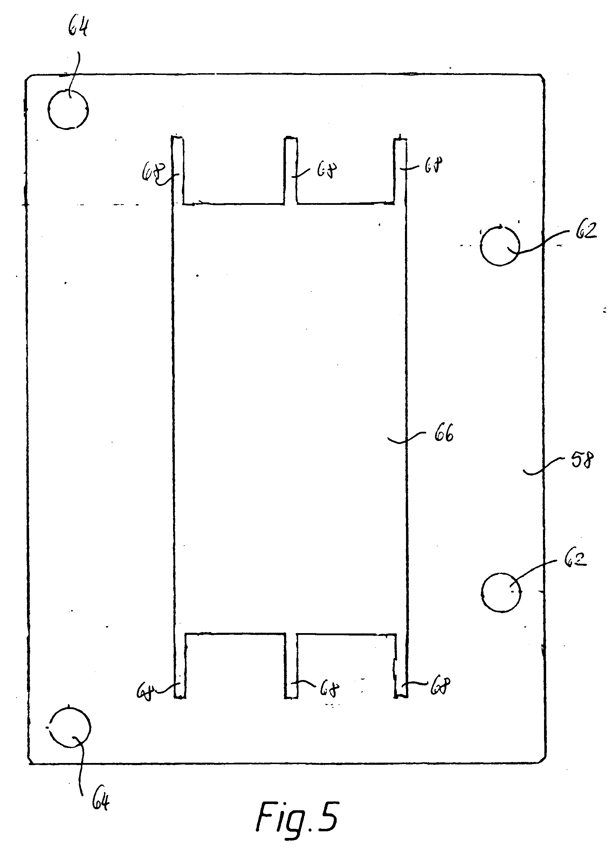

Fig. 2 zeigt größere Einzelheiten einer vorteilhaften Ausführungsform des erfindungsgemäßen Flüssigkeitsabscheiders, wobei der Boden 26 wie auch der Deckel 30 jeweils aus einer mit Querrillen 56 (siehe Fig. 7) versehenen Platte 26 besteht, die zwischen zwei Endplatten 58 mit Hilfe von Schraubbolzen 60 eingespannt sind. Fig. 5 zeigt in einer Draufsicht eine derartige Endplatte 58 und läßt neben den am Rand angeordneten Rundlöchern 62, 64 für Spannbolzen 60 gemäß Fig. 2 noch einen Kanaldurchbruch 66 erkennen, von dem nach oben und unten sich Einschnitte 68 erstrekken, in die die Enden 70 bzw. 72 von in diesem Falle drei Metallprofilen 74 eingeschoben werden können, welche Metallprofile 74 von Rohmaterial in Form von Meterware abgeschnitten werden können und daher sehr preisgünstig sind. Diese Metallprofile 74 bilden die bereits erwähnten Fangtaschen 14 bis 20 sowie entsprechend auch Abrißkanten 114, 116, 118. Anstatt, wie hier dargestellt, drei derartige Profile 74 nebeneinander anzuordnen, läßt sich auch eine andere Zahl derartiger Profile miteinander kombinieren, beispielsweise zwei, drei, vier oder auch noch wesentlich mehr, je nach der gewünschten Durchsatzkapazität des Flüssigkeitsabscheiders.

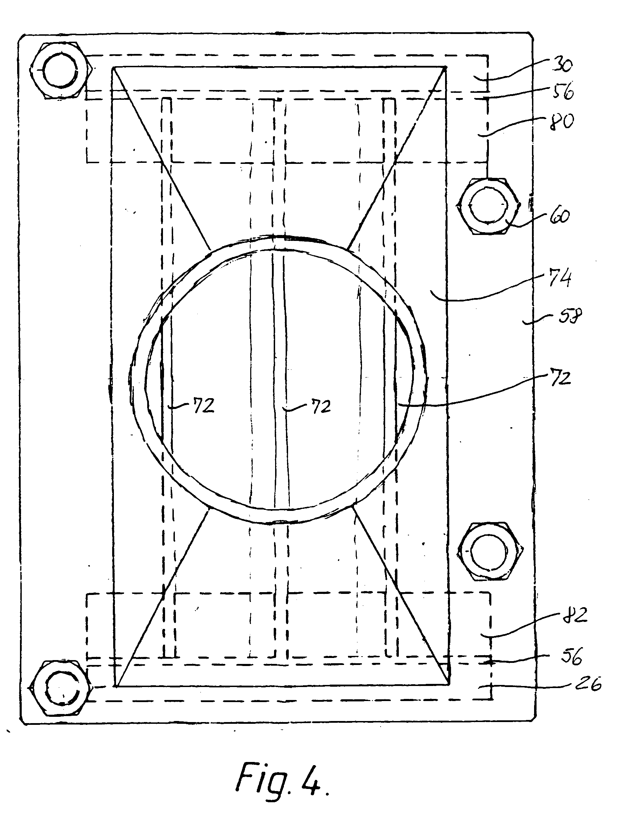

An die Platten 58 ist ein konusförmiger Eintrittsstutzen 76 und ggf. ein Austrittsstutzen 78 angeflanscht, beispielsweise mittels der Schraubbolzen 60, siehe beispielsweise den auf das linke Stirnende der Ausführungsform gemäß Fig. 2 gerichtete Blick, der in Fig. 4 wiedergegeben ist. Der Austrittsstutzen kann auch entfallen und durch andere Anschlußformen ersetzt werden.

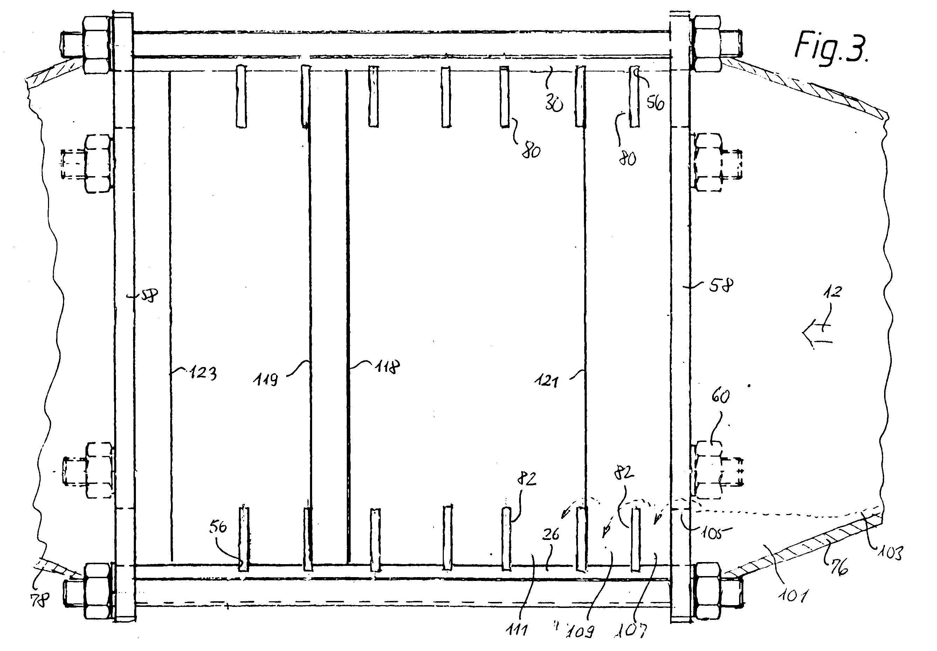

Die bereits erwähnten Querrillen 56 in der als Deckel 30 dienenden Platte wie auch in der als Boden 26 dienenden Platte, siehe z. B. die Fig. 7, insbesondere aber die Fig. 3, dienen zur Anordnung von als Schikanen für einen mitgerissem Flüssigkeitsfilm wirkenden Zwischenwänden 80 bzw. 82. Diese Zwischenwände erstrecken sich über die gesamte Breite des Deckels 30 bzw. des Bodens 26 und durchstoßen dabei auch die Metallprofile 74, zu welchem Zwecke diese an den geeigneten Stellen mit entsprechenden Einschnitten versehen sind. Alternativ könnten auch die Zwischenwände 80, 82 zur Aufnahme der Wandform der Profile 74 mit Einschnitten versehen sein, jedoch ist der erstgenannte Weg in der Herstellung einfacher und auch strömungstechnisch günstiger, da im zweiten Falle ein Leckweg für Flüssigkeitsfilm an der Bodenfläche bzw. an der Deckelfläche entstehen würde.

In der Seitenansicht der Fig. 3 (entsprechend einer Blickrichtung von hinten gemäß Fig. 2) sind die Begrenzungskanten 118, 119 und 121 sowie die Ecke 123 zu erkennen, die auch in den Fig. 6 und 8 zu erkennen ist.

Entsprechend sind in Fig. 2 von dem Profil 74 gemäß Fig. 8 die Kanten 116 und 114 zu erkennen, wie auch die zugehörigen Fangtaschen oder Fangrillen 16 und 14, die hier allerdings keine Funktion haben, da sie bereits außerhalb der beiden Strömungskanalteile mit den Bezeichnungen 12 liegen, wie sie in Fig. 6 beispielhaft zu erkennen sind. (Bei Anordnung weiterer Profile 74 parallel zu den dargestellten Profilen würden sich entsprechend weitere Strömungskanalteile verwirklichen lassen.)

In Fig. 6 sind als Durchbrüche zum Sammelraum Rundbohrungen 42, 44, 46, 48 dargestellt, die durch einfaches Durchbohren der Bodenplatte 26 gebildet werden können. Andere Durchbruchsformen sind selbstverständlich ebenso möglich, die aber meist schwieriger in der Herstellung sein werden.

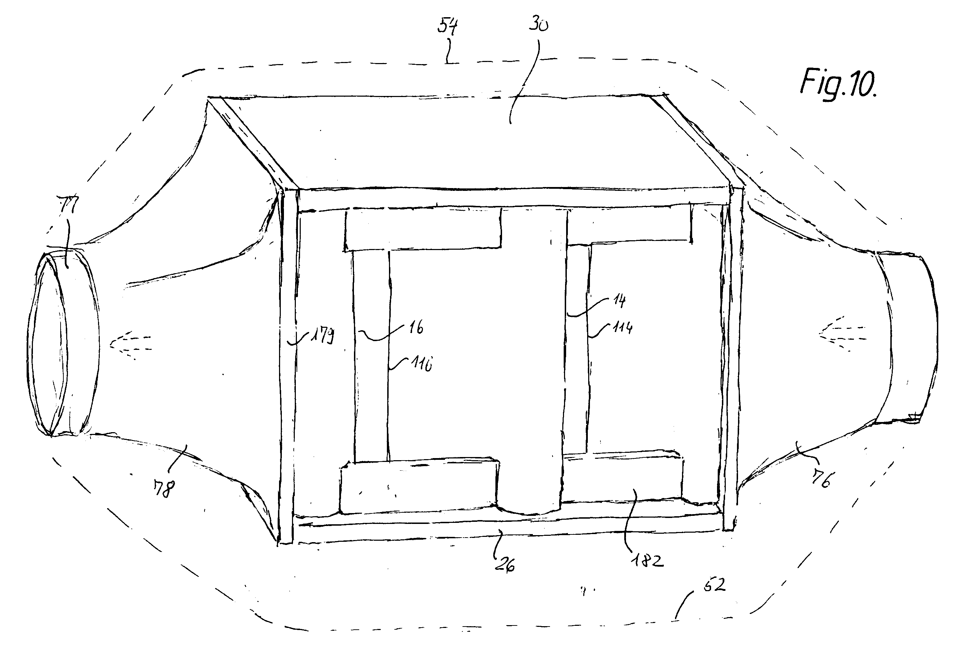

Bei hohen Strömungsgeschwindigkeiten und entsprechend starkem Druckabfall zwischen Eintritt 40 und Austritt 38 kann es zu Nebenströmungen kommen, die bei den nahe dem Eintritt 40 liegenden Durchbrüchen 42, 44 vom Strömungskanal 22 in Richtung auf den Sammelraum 32 verlaufen, während bei den nahe dem Austritt 38 liegenden Durchbrüchen, wie beispielsweise dem Durchbrüchen 46, 48, eine umgekehrte Nebenströmung sich ausbildet. Dies fördert zwar bei den Durchbrüchen 42, 44 den Abfluß von Kondensat, bei den Durchbrüchen 46, 48 wird jedoch dieser Abfluß behindert. Aus diesem Grunde kann gemäß einer Weiterbildung der Erfindung, siehe Fig. 9, an den einzelnen Durchbrüchen jeweils ein siphonartiges U-Rohr angeordnet werden, in dessen U-Bogen 84 sich Kondensat sammeln wird, wobei man die Austrittsebene 86 der einzelnen Bogen, siehe Bezugszahlen 86, 88, 90 in Fig. 9, mit abgestuften Höhen $\Delta H1, \Delta H2, \Delta H3$ derart versehen kann, daß sich unterschiedliche Drücke ergeben, bei denen das Kondensat aus dem Bogen austritt. Man kann diesen Druck $\Delta_P$, der zum Ausdrücken des Kondensats aus dem Bogen 84 notwendig ist, somit an die Druckdifferenz anpassen, die jeweils mit Bezug zum letzten Durchbruch 48 vorhanden ist, wobei der letzte Durchbruch 48 dann ohne ein derartiges U-Rohr auskommt, weil dort diese Druckdifferenz 0 wäre.

Handelt es sich bei dem Kondensat um Wasser, und beträgt der gesamte Druckabfall weniger als 1 Millibar, was ein üblicher Wert darstellt, entspricht dies einer Wassersäule von weniger als 1 cm. Es würde dann ausreichen, beim Vorhandensein von beispielsweise fünf Durchbrüchen, wie es in Fig. 1 beispielhaft dargestellt ist, dem ersten Durchbruch 42 einen Siphon mit einer Höhendifferenz $\Delta H1$ von 10 mm zu geben, dem Durchbruch 44 entsprechend einen Siphon mit einer Höhendifferenz von 7,5 mm, dem nicht bezeichneten Durchbruch entsprechend einen Siphon mit einer Höhendifferenz $\Delta H3$ von 5 mm, dem Durchbruch 46 entsprechend einen Siphon nur noch mit einer Höhendifferen von 2,5 mm, während der Durchbruch 48 einen Siphon nicht mehr benötigt, da dort der Druckunterschied 0 wird.

Die Anordnung von derartigen Siphons ist aber verhältnismäßig umständlich und es hat sich gezeigt, daß ein noch einfacherer und wirksamerer Weg möglich ist. Dies ergibt sich daraus, daß ein Druckzylinder und ein Druckgehäuse 10 vorgesehen ist, der die gesamte Anordnung aus Bodenplatte 26, Deckel 24 und Seitenwänden 28 mit Anschlußtrichtern 76 bzw. 78, die jeweils in Anschlußrohrstutzen 77, 79 übergehen, umgibt, welches Gehäuse an seinen beiden Enden mit Abschlußdekkeln oder sogenannten Klepperbodenwänden 71 bzw. 73 verschlossen ist, durch die das Zufuhrrohr 41 bzw. Abfuhrrohr 43 druckdicht hindurchgeführt ist, beispielsweise durch Verschweißen mit einer Schweißnaht 45. Auf das Ende dieses Rohres 41 bzw. 43 ist unter Zwischenlage einer Dichtungsmasse 47 das rohrförmige Ende 77 bzw. 79 der Kanalanordnung 22 aufgeschoben. Auf diese Weise gelingt es, dem Sammelraum 32 einen eigenen Druck zu geben, der vorzugsweise niedriger ist als der Druck, der am Kondensat-Durchbruch 48, das ist der dem Austritt 38 am nächsten liegende Durchbruch, anliegt, so daß stets eine in den Sammelraum gerichtete Saugwirkung auf die durch diese Durchbrüche abfließende Kondensatflüssigkeit ausgeübt wird. Dieser Unterdruck kann beispielsweise dadurch hergestellt werden, daß eine Rohrverbindung 88 vorgesehen wird, die einerseits mit einem Rohranschluß 90 in Verbindung steht, der sich am Druckgehäuse befindet, das den Sammelraum 32 bildet, andererseits mit einem Rohranschluß 92, der an einer Stelle des Abfuhrrohres 43 angebracht ist, die einen bestimmten Abstand vom Austritt 31 aufweist, welcher Abstand so groß ist, daß zwischen dem Austritt 31 und dieser Stelle durch den Strömungswiderstand innerhalb des Rohres 43 ein Druckgefälle entsteht, das ausreichend groß ist, um den gewünschten Unterdruck im Sammelraum 32 zu bewirken.

Nachteilig bei dieser Konstruktion ist allerdings der Platzbedarf für die Anordnung dieses Rohres 88, das möglicherweise ein Länge von 1 bis 2 m aufweist, je nach dem gewünschten Unterdruck.

Bei geringeren Strömungsgeschwindigkeiten kann es gemäß einer weiteren Ausführungsform ausreichen, das Rohr 88 wegzulassen und stattdessen lediglich einen Durchbruch 94 vorzusehen, durch den durch die Durchbrüche 42, 44 beispielsweise in den Sammelraum eindringendes Gas wieder austreten kann, so daß das Gas nicht durch die Öffnungen 46, 48 in den Kanal 22 wieder eindringt. Der Druchbruch 94 bildet somit eine Art Nebenschluß, der allerdings nur dann wirksam ist, wenn die Querschnittsfläche dieses Durchbruches 94 erheblich größer ist, als die der anderen Durchbrüche, die nebengeschlossen werden sollen.

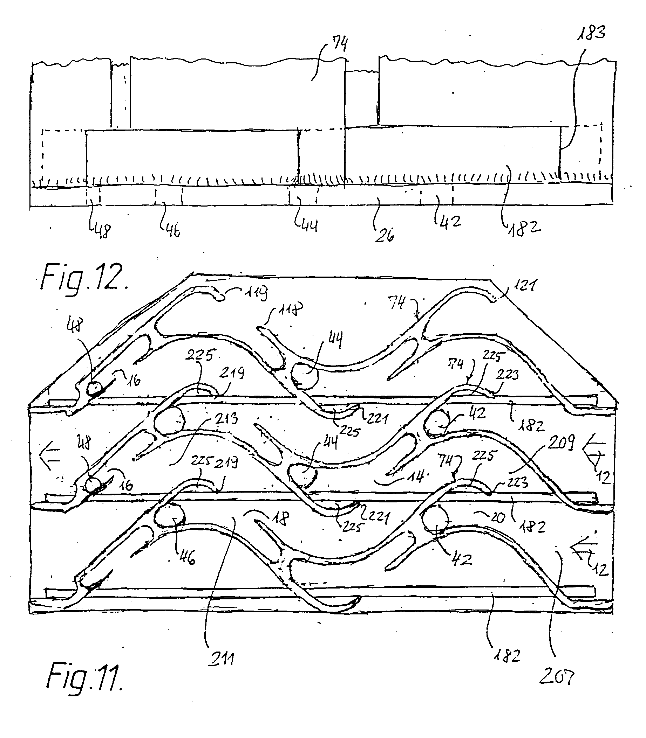

Bei manchen Anwendungsfällen, beispielsweise bei Drucklufttrocknern mit spiralförmig angeordneten Wärmetauscherschlangen, entsteht bereits vor dem Kondensatabscheider abgeschiedenes Kondensat, das sich als Bodenbach im Zuflußrohr 41 bemerkbar macht. Dieser Bodenbach 103 kann bei der in den Fig. 2 bis 7 dargestellten Ausführungsform zu einem Vollaufen eines vor der Endplatte 58 liegenden Bodenraumes 101 mit Kondensat führen, woraufhin es zu einem Überlaufen über die Kante 105 kommt, so daß sich nun ein Raum 107 füllt, der sich vor der ersten Querleiste 82 befindet. Sobald dieser Raum vollgelaufen ist, wird das Kondensat über die Querleiste 82 fließen und den nächsten Raum 109 füllen. Wenn dieser Raum voll ist, überfließt das Kondensat die zweite Querwand 82, um nunmehr in einen Raum 111 zu gelangen der sich allerdings nicht mehr füllen wird, weil er mit den Durchbrüchen 42 versehen ist. Das Überfließen über die beiden Zwischenwände 82 sowie der Kante 105 der Endplatte 58 sowie auch das Vorhandensein der Flüssigkeitsspiegel in den einzelnen Räumen 101, 107 und 109, kann nachteilig sein, weil bei hohen Strömungsgeschwindigkeiten es wiederum hier zu Mitreißeffekten von Flüssigkeit kommen kann. Aus diesem Grunde ist bei Anwendungen, bei denen mit dem Zuleiten von Kondensat aus vorherigen Anordnungen in Form eines Bodenbaches 103 zu rechnen ist, eine Konstruktion günstiger, wie sie in den Figuren 10, 11 und 12 näher erläutert wird. Wie insbesondere die Fig. 11 erkennen läßt, sind hier die Zwischenwände 182 nicht quer zur Achse des Kondensatabscheiders angeordnet, wie es noch die Fig. 6 erkennen läßt, sondern stattdessen parallel zu dieser Achse. Trotzdem ergibt sich eine Schikane oder Vorsprung, der die jeweilige Strömungsrichtung der zu behandelnden Zwei-Phasen-Strömung 12 schneidet, dies aufgrund des meandrierenden Strömungsweges, den die Profile 74 dem Medium aufzwingen.

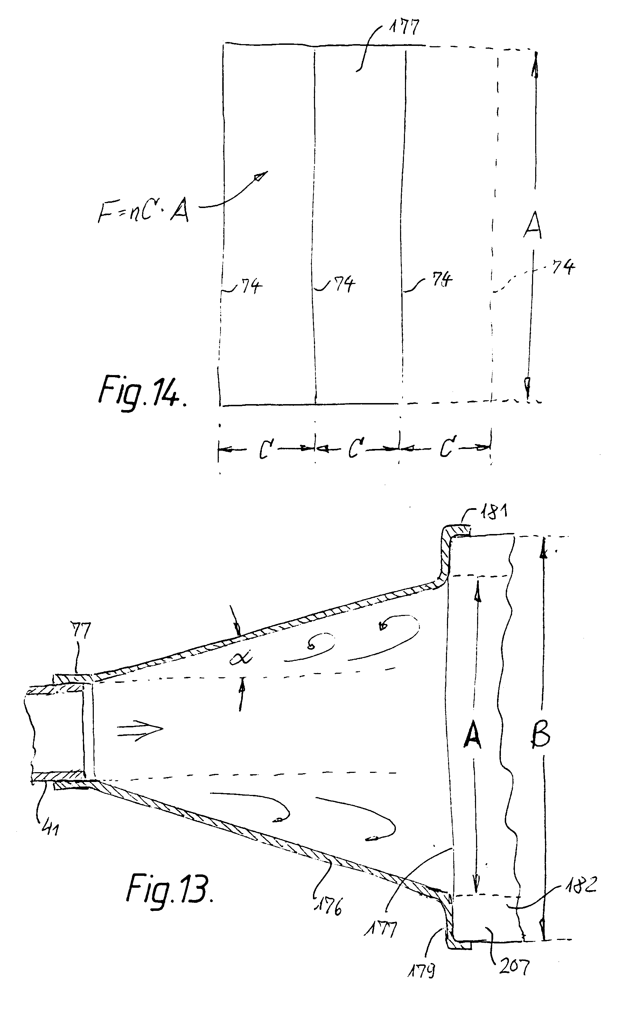

Wie zu erkennen ist, kann sich infolge der Zwischenwände 182 kein Aufstauen von Kondensat mehr ergeben, weil bereits der erste, von den Zwischenwänden 182 gebildete Raum 207 von den Durchbrüchen 42 entwässert wird. Ähnlich wird der nächste Raum 209, den das Medium dann durchströmt, von einem Durchbruch entwässert, und zwar ist es jetzt der Durchbruch 44. Entsprechend ist der darauffolgende Raum 211 des gleichen Strömungsweges vom Durchbruch 46 entwässert, während der letzte Abschnitt, der ein abgeschlossenes Volumen 213 bildet, vom Durchbruch 48 entwässert. wird. Das Ansammeln eines Sees vor dem Eintritt, entsprechend dem Raum 101 gemäß Fig. 3, kann verhindert werden, wenn ein Trichter 176 im Bereich der Eintrittsöffnung einen inneren Konus bildet, der in den freien Durchtrittsquerschnitt 177 des von den Profilen 74 gebildeten Strömungskanals 22 übergeht. Das bedeutet, daß ein Bach 103 direkt in den Raum 207 entwässert, der zwischen den Zwischenwänden 182 gebildet ist, siehe Fig. 13.

Auch aus anderen Gründen ist es günstig, wenn der Trichter 176 zumindest im Bereich der Eintrittsöffnung einen inneren Konus bildet, der in den freien Durchtrittsquerschnitt 177 des von den Profilen gebildeten Strömungskanals übergeht: Einerseits entfallen irgendwelche zusätzliche, in den Strömungskanalquerschnitt vorspringende Zwischenwände, die zu Strömungswiderstandserhöhungen führen würden, andererseits entfallen auch Hinterschneidungen, die zu Strömungsabbrüchen führen könnten, was zu schädlichen Verwirbelungserscheinungen führen. Derartige Wirbelbildungen können nämlich wieder zum Mitreißen von Flüssigkeit aus bereits abgeschiedenem Kondensat (Bodenbach) führen. Aus dem gleichen Grunde sollte der Konuswinkel $\alpha$, der in Fig. 13 dargestellt ist, das ist der Konuswinkel bezüglich der Trichterachse, einen bestimmten Wert nicht überschreiten, welcher Winkel so gewählt werden sollte, daß gerade noch kein Strömungsabriß auftritt.

Fig. 10 läßt eine besonders günstige Ausführungsform der Konstruktion gemäß Fig. 11 erkennen, wobei die einzelnen Bauteile - mit Ausnahme von ggf. den Profilen - nämlich Deckelwand 30, Bodenwand 26, Eintrittstrichter 76, Austrittstrichter 78 und Zwischenwände 182 aus Kunststoff bestehen und jeweils miteinander verklebt sind und dadurch eine besonders einfache und raumsparende wie auch stabile Einheit ergeben. Als Kunststoff hat sich graues Polyvinylchlorid, das gespritzt oder tiefgezogen sein kann, insbesondere für die beiden Trichter, bewährt, verwendbar ist aber auch metallisches Material, wie z. B. Aluminium. Die Trichter 78, 76 können dabei gemäß Fig. 13 einen besonderen Flansch 179 bilden, der eine gute Anlagefläche für angrenzende Stirnkanten von Boden- und Deckelwand bzw. Vorsprungsleisten 182 wie auch Profile 74 ergeben, wobei zusätzlich noch eine Umfassung 181 angeordnet sein könnte, um eine besonders stabile Konstruktion zu erhalten.

An seinem einen Ende, das in den Flansch 179 übergeht, ist der Trichter 176 rechteckförmig, um sich an die entsprechende Rechteckform der Eintrittsöffnung 177 anzupassen. Diese Rechteckform ergibt sich dadurch, daß mehrere Profile 76 jeweils im Abstand C hintereinander angeordnet werden. Die gewünschte Durchtrittsfläche, die die Durchtrittsleistung bestimmt, hängt ab von der Anzahl der Profile und damit der Anzahl N der Abstände C zwischen diesen Profilen 76 sowie der freien Durchtrittshöhe A, die etwa gleich der abgeschnittenen Profilbreite B entspricht, abzüglich der beiden Höhen der Zwischenwände 207 an Boden und Deckel. Das andere Ende des Trichters 176 sollte einen runden Querschnitt aufweisen, um ein kreisförmiges Anschlußrohr 41 einschieben und bezüglich eines ebenfalls kreisförmigen Rohrendes 77 des Trichters 176 dicht abschließen zu können.

Während die Klebeflächen beispielsweise zwischen der Bodenplatte 26 gemäß Fig. 12 und den Zwischenwänden 182 bzw. den Profilen 74 automatisch zu einer Abdichtung zwischen diesen Teilen führen, ist es günstig, auf die Anordnung von Kleber an den Übergangsstellen zwischen Zwischenwand und Einschnitt in den Profilen, siehe Bezugszahl 183 in Fig. 12, zu verzichten, weil dies ein verhältnismäßig aufwendiges Herstellungsverfahren bedingen würde. Stattdessen reicht es, wenn eine Verpressung der Zwischenwand 182 in dem Schlitz 183 des Profils 74 erfolgt.

Da die Form des Austritts für die Funktionsweise des Flüssigkeitsabscheiders ohne Bedeutung ist, kann die Austrittsseite auch so gestaltet werden, daß das in Fig. 1 rechte Ende 53 des Gehäuses 24 mittels durchbrochener Stützwände oder mittels Stützstreben 55 an den Wänden 28, 52 oder 54 des Abscheiders gehalten ist und statt des konischen Austrittstrichters 78 z. B. ein stufenweise sich verjüngender Austrittsbereich vorhanden ist. Dazu können oben ein Stück freilassende Blechstreifen dienen, die dadurch einen Schlitz bilden, der die Funktion des Durchbruchs 94 in Fig. 1 übernimmt. Vorteil dieser Konstruktion: verkürzte Bauweise und direkter Anschluß an die nachfolgende Stufe eines Luftbehandlungsgerätes, in das der Flüssigkeitsabscheider eingebaut werden soll.

In Fig. 11 ist zu erkennen, daß am Austritt der Luft aus den Profilen der Querschnitt des Strömungskanals sich erweitert (die Platz beanspruchenden Fangrillen entfallen hier!).

Um Querwirbel innerhalb der Hohlräume 225, die von den Fangtaschenwänden und den Zwischenwänden bei der Ausführungsform gemäß Fig. 11 gebildet werden, zu vermeiden, können diese Hohlräume 225 durch Vergußmasse verfüllt oder, einfacher, die Zwischenwände 182 so angeordnet werden, daß die zu ihnen naheliegenden Enden 219, 221, 223 der Fangrillen 18, 14, 20 die Zwischenwände annähernd gasdicht berühren.

**Patentansprüche**

1.   Flüssigkeitsabscheider (10) zum Abscheiden von in einer Zwei-Phasen-Strömung (12) mitgeführten Flüssigkeits- und Feststoffanteil (34), bei dem die Strömung (12) durch einen aus senkrecht nebeneinander angeordneten, wellförmigen Profilen (74) mit Fangtaschen (14, 16, 18, 20) bestehenden Kanal (22) hindurchgeleitet wird, wobei die Profile (74) einerseits von einer Bodenplatte (26) und andererseits von einer Deckelplatte (30) begrenzt sind und wobei die Bodenplatte (26) Durchbrüche (42, 44, 46, 48) aufweist, die in einen an ihre Unterseite angrenzenden Sammelraum (32) münden,
    **dadurch gekennzeichnet,**
    daß die Durchbrüche (42, 44, 46, 48) in der Bodenplatte (26) lediglich im Bereich der Fangtaschen (20, 14, 18, 16) vorgesehen sind.

2. Flüssigkeitsabscheider nach Anspruch 1, dadurch gekennzeichnet, daß Bodenplatte (26), Deckelplatte (30) und Seitenwände (28) von einem weiteren, ggf. auch den Sammelraum (32) bildenden Druckgehäuse (54, 52) umschlossen sind.

3. Flüssigkeitsabscheider nach Anspruch 1 oder 2, dadurch gekennzeichnet, daß die Profile (74) mit ihren Enden von Endplatten (58) gehalten werden, die gleichzeitig die Eintrittsöffnung (40) bzw. Austrittsöffnung (38) begrenzen.

4. Flüssigkeitsabscheider nach Anspruch 1, 2 oder 3, dadurch gekennzeichnet, daß die Profile (74) von Boden-und Deckelplatte (26; 30) gehalten werden.

5. Flüssigkeitsabscheider nach Anspruch 1, 2, 3 oder 4, dadurch gekennzeichnet, daß von der den Kanal begrenzenden Fläche der Deckelplatte (30) die Strömungsrichtung schneidende Vorsprünge (82) ausgehen.

6. Flüssigkeitsabscheider nach einem der Ansprüche 1 bis 5, dadurch gekennzeichnet, daß die den Strömungskanal (22) begrenzenden Fläche der Bodenplatte (26) zumindest im Bereich von nahe der Austrittsöffnung (38) gelegenen Durchbrüchen von der Fläche nach innen vorspringende, die Strömungsrichtung schneidende Vorsprünge aufweist.

7. Flüssigkeitsabscheider nach Anspruch 4 oder 5, dadurch gekennzeichnet, daß die Vorsprünge die Form von Zwischenwänden haben, die entweder parallel oder senkrecht zur Achse des Flüssigkeitsabscheiders verlaufen.

8. Flüssigkeitsabscheider nach Anspruch 5, 6, oder 7, dadurch gekennzeichnet, daß die Profile (74) Einschnitte zur Aufnahme der Vorsprünge (82) besitzen.

9. Flüssigkeitsabscheider nach einem der Ansprüche 1 bis 8, dadurch gekennzeichnet, daß die Durchbrüche (42, 44, 46, 48) Rundbohrungen sind und an den Durchbrüchen U-Form aufweisende in den Sammelraum (32) mündende Überlaufstutzen (84) zur Ausbildung einer Überlaufflüssigkeitssäule der Höhe $\Delta$ H angeordnet sind.

10. Flüssigkeitsabscheider nach Anspruch 9, dadurch gekennzeichnet, daß $\Delta$ $H_n$ (n = 1, 2, 3...) bei Durchbrüchen am Beginn des Strömungskanals größer ist als am Ende des Strömungskanals, vorzugsweise in der Form, daß $\Delta$ $P_n$ = q x g $\Delta$ $H_n$ ist, mit $P_2$ - $P_1$ = $\Delta$ P als Strömungsdruckunterschied zwischen dem jeweiligen Durchbruch (42, 44, 46) und dem letzten Durchbruch (48) am Strömungskanalende, g als spezifisches Gewicht der Flüssigkeit, die abgeschieden wird, und g als Erdbeschleunigung.

11. Flüssigkeitsabscheider nach einem der Ansprüche 1 bis 10, dadurch gekennzeichnet, daß die Seitenwände des Strömungskanals von Profilen (74) gebildet sind.

12. Flüssigkeitsabscheider nach einem der Ansprüche 1 bis 11, wobei der Strömungskanal (22) am Anfang (40) und/oder Ende (38) in einen Trichter (76 bzw. 78) übergeht, der in ein Anschlußrohr oder dgl. mündet, dadurch gekennzeichnet, daß der Strömungskanal (22) nur einen geringfügig größeren Strömungsquerschnitt aufweist, als Trichter (76, 78) und Anschlußrohr.

13. Flüssigkeitsabscheider nach einem der Ansprüche 1 bis 8, 11 oder 12, dadurch gekennzeichnet, daß das den Sammelraum (32) bildende Druckgehäuse einen Rohranschluß (90) aufweist, der über eine Rohrverbindung (88) mit einem anderen Rohranschluß (92) in Verbindung steht, der an einer Stelle des am Austritt (38) beginnenden Anschlußrohres (43) angebracht ist, die vom Austritt (38) soweit entfernt ist, daß zwischen Austritt (38) und anderem Rohranschluß (92) ein durch Strömungswiderstand entstehendes Druckgefälle sich ergibt, das gleich oder größer ist als das Druckgefälle zwischen den Durchbrüchen (42) am Beginn des Strömungskanals (22) und den Durchbrüchen (48) am Ende des Strömungskanals (22).

14. Flüssigkeitsabscheider nach einem der Ansprüche 1 bis 8, 11 oder 12, dadurch gekennzeichnet, daß hinter dem Austritt (38) ein in den Strömungskanal sich öffnender Nebenschlußdurchbruch (94) vorgesehen ist, der einen Querschnitt besitzt, der größer ist als die Summe der Querschnitte aller in den Sammelraum (32) sich öffnender Kondensatableitdurchbrüche (42, 44, 46, 48).

15. Flüssigkeitsabscheider nach einem der Ansprüche 1 bis 14, dadurch gekennzeichnet, daß die Profile (74) aus Metall, vorzugsweise Aluminium, und die den Strömungskanal ansonsten begrenzenden Bauteile aus Metall oder aus Kunststoff, vorzugsweise grauem Polyvinylchlorid (PVC) bestehen.

16. Flüssigkeitsabscheider nach Anspruch 15, dadurch gekennzeichnet, daß die Zwischenwände (82, 182) in den Einschnitten der Profile (74) im wesentlichen flüssigkeitsdicht eingepresst sind.

17. Flüssigkeitsabscheider nach Anspruch 15 oder 16, dadurch gekennzeichnet, daß die Kanten der Profile (74), die an Bodenwand (26) oder Deckelwand (24) anstoßen, mit diesen Wänden verklebt sind.

18. Flüssigkeitsabscheider nach Anspruch 15, 16 oder 17, dadurch gekennzeichnet, daß die Zwischenwände (82, 182) mit ihren an der Bodenbzw. Deckelwand (26, 30) angrenzenden Stirnfläche mit diese jeweils verklebt sind.

19. Flüssigkeitsabscheider nach einem der Ansprüche 2 bis 18, dadurch gekennzeichnet, daß der Trichter (41, 78) zumindest im Bereich der Eintrittsöffnung einen inneren Konus bildet, der in den freien Durchtrittsquerschnitt (177) des von den Profilen (74) gebildeten Strömungskanals übergeht.

20. Flüssigkeitsabscheider nach einem der Ansprüche 12 bis 19, dadurch gekennzeichnet, daß der Trichter (176) im Bereich der Eintrittsöffnung einen Diffusor darstellt und einen inneren Konus bildet, desses Konuswinkel ($\alpha$) bezüglich der Trichterachse einen Winkel nicht überschreitet, der so gewählt ist, daß die Diffusion noch keinen Strömungsabriß bewirkt.

21. Flüssigkeitsabscheider nach einem der Ansprüche 2 bis 20, dadurch gekennzeichnet, daß das Druckgehäuse aus Stahlblech besteht, einen vorzugsweise runden Querschnitt aufweist und am Eintritt und am Austritt in eine Klöpperbodenwand (71, 73) übergeht, die mit dem ebenfalls aus Stahlblech oder Stahlrohr bestehenden Anschlußrohren (41, 43) dicht verschweißt (45) ist.

22. Flüssigkeitsabscheider nach einem der Ansprüche 12 bis 21, dadurch gekennzeichnet, daß der Trichter (176) aus Kunststoff, vorzugsweise grauem Polyvinylchlorid, gespritzt oder tiefgezogen ist und einen Flansch (179) bildet, der mit den angrenzenden Stirnkanten von Boden-und Deckelwand (26, 30) bzw. Vorsprungsleisten (182) und Profilen (74) verklebt ist.

23. Flüssigkeitsabscheider nach einem der Ansprüche 1 bis 22, dadurch gekennzeichnet, daß die Zwischenwände (182) die zu ihren nahegelegenen Enden (219, 221, 223) der Fangrillen annähernd gasdicht berühren, um sonst entstehende Querwirbel zu verhindern.

**Claims**

1. A liquid separator (10) for separating liquid and solid portions (34) being carried jointly in a twophase flow (12), in which the flow (12) is led through a channel (22) consisting of wavy profiles (74) juxtaposed vertically with catcher pockets (14, 16, 18, 20), the profiles (74) being bounded on one side by a bottom plate (26) and on the other side by a coverplate (30) and the bottom plate (26) exhibiting apertures (42, 44, 46, 48) which open into a collector chamber (32) adjoining it on the underside, **characterized in that** the apertures (42, 44, 46, 48) in the bottom plate (26) are provided solely in the region of the catcher pockets (20, 14, 16, 18).

2. A liquid separator as in Claim 1, characterized in that the bottom plate (26), coverplate (30) and sidewalls (28) are enclosed by a further pressure housing (54, 52) also forming if necessary the collector chamber (32).

3. A liquid separator as in Claim 1 or 2, characterized in that the profiles (74) are supported at their ends by endplates (58) which at the same time define respectively the inlet opening (40) and outlet opening (38).

4. A liquid separator as in Claim 1, 2 or 3, characterized in that the profiles (74) are supported by the bottom plate and coverplate (26; 30).

5. A liquid separator as in Claim 1, 2, 3 or 4, characterized in that projections (82) cutting across the direction of flow start from the area of the coverplate (30) bounding the channel.

6. A liquid separator as in one of the Claims 1 to 5, characterized in that at least in the region of apertures placed near the outlet opening (38) the area of the bottom plate (26) bounding the flow channel (22) exhibits projections projecting inwards from the area to cut across the direction of flow.

7. A liquid separator as in Claim 4 or 5, characterized in that the projections have the form of partitions which run either in parallel with or perpendicular to the axis of the liquid separator.

8. A liquid separator as in Claim 5, 6 or 7, characterized in that the profiles (74) have incisions for receiving the projections (82).

9. A liquid separator as in one of the Claims 1 to 8, characterized in that the apertures (42, 44, 46, 48) are round bores and in the apertures overflow connections (84) are arranged which exhibit a U-shape and open into the collector chamber (32) to form an overflow liquid column of height $\triangle H$.

10. A liquid separator as in Claim 9, characterized in that with apertures at the start of the flow channel $\triangle H_n$ ($n = 1, 2, 3...$) is greater than at the end of the flow channel, preferably in the form; $\triangle P_n = q \times g \triangle H_n$, $P_2 - P_1 = \triangle P$ being the difference in pressure in the flow between the respective aperture (42, 44, 46) and the last aperture (48) at the end of the flow channel, g the specific weight of the liquid being separated, and g the acceleration due to gravity.

11. A liquid separator as in one of the Claims 1 to 10, characterized in that the sidewalls of the flow channel are formed by profiles (74).

12. A liquid separator as in one of the Claims 1 to 11, in which at the start (40) and/or end (38) the flow channel (22) continues into a funnel (76 resp. 78) which open-into a connecting tube or the like, characterized in that the flow channel (22) exhibits a cross-section of flow only slightly greater than the funnel (76, 78) and connecting tube.

13. A liquid separator as in one of the Claims 1 to 8, 11 or 12, characterized in that the pressure housing forming the collector chamber (32) exhibits a tube connector (90) which is connected via a tube connection (88) to another tube connector (92) which is fitted to the connecting tube (43) starting from the outlet (38) at a point which lies at a distance from the outlet (38) such that between the outlet (38) and the other tube connector (92) a pressure drop arising from the resistance to flow results which is equal to or greater than the pressure drop between the apertures (42) at the start f the flow channel (22) and the apertures (48) at the end of the flow channel (22).

14. A liquid separator as in one of the Claims 1 to 8, 11 or 12, characterized in that beyond the outlet (38) a bypass aperture (94) opening into the flow channel is provided, having a cross-section which is greater than the sum of the cross-sections of all of the condensate drain apertres (42, 44, 46, 48) opening into the collector chamber (32).

15. A liquid separator as in one of the Claims 1 to 14, characterized in that the profiles (74) consist of metal, preferably aluminium, and the components bounding the flow channel elsewhere consist of metal or plastics, preferably grey polyvinylchloride (PVC).

16. A liquid separator as in Claim 15, characterized in that the partitions (82, 182) are pressed into the incisions in the profiles (74) so as to be essentially liquidtight.

17. A liquid separator as in Claim 15 or 16, characterized in that the edges of the profiles (74) which butt against the bottom wall (26) or cover wall (24) are glued to these walls.

18. A liquid separator as in Claim 15, 16 or 17, characterized in that where the partitions (82, 182) adjoin the bottom wall or cover wall (26, 30) their endfaces are respectively glued to the latter.

19. A liquid separator as in one of the Claims 2 to 18, characterized in that the funnel (41, 78) at least in the region of the inlet opening forms an inner cone which continues into the free cross section (177) of passage of the flow channel formed by the profiles (74).

20. A liquid separator as in one of the Claims 12 to 19, characterized in that the funnel (176) in the region of the inlet opening represents a diffuser and forms an inner cone the apex angle ($\alpha$) of which does not exceed with respect to the axis of the funnel an angle which is so chosen that the diffusion still does not bring about any breakaway of the flow.

21. A liquid separator as in one of the Claims 2 to 20,

characterized in that the pressure housing consists of sheetsteel, exhibits a preferably round cross-section and at the inlet and oulet continues into the wall (71, 73) of a dished head, which is welded (45) tightly to the connector tubes (41, 43) which likewise consist of sheetsteel or steel tube.

22. A liquid separator as in one of the Claims 12 to 21,
characterized in that the funnel (176) is injection-moulded or deep-drawn from plastics, preferably grey polyvinylchloride, and forms a flange (179) which is glued to the adjoining endfaces of the bottom wall and cover wall (26, 30) or respectively the projecting fillets (182) and the profiles (74).

23. A liquid separator as in one of the Claims 1 to 22,
characterized in that the partitions (182) touch the catcher-troughs at their nearer ends (219, 221, 223) in an approximately gastight manner in order to prevent cross-eddies which would otherwise arise.

## Revendications

1. Séparateur de liquide (10) pour la séparation d'une fraction formée de solide et de liquide (34) entraînée dans un courant (12) comprenant des phases, dans lequel le courant (12) est guidé de manière à parcourir un conduit (22) constitué par des profils ondulés (75) disposés les uns à côté des autres et comportant des poches de capture ( 14, 16, 18, 20), ces profils étant limités d'un côté par une plaque de base (26) et de l'autre côté par une plaque de couverture (30) et la plaque de base (26) comportant des ouvertures de passage (42, 44, 46, 48) qui débouchent dans une enceinte collectrice (32) contiguë à son côté inférieur, caractérisé en ce que les ouvertures de passage (42, 44, 46, 48) ménagées dans la plaque de base (26) ne se trouvent que dans la zone des poches de capture (20, 14, 18, 16).

2. Séparateur de liquide selon la revendication 1, caractérisé en ce que la plaque de base (26), la plaque de couverture (30) et les parois latérales (28) sont entourées par une autre enceinte sous pression (54, 52) qui, le cas échéant, constitue également l'enceinte collectrice (32).

3. Séparateur de liquide selon l'une des revendications 1 ou 2, caractérisé en ce que les profils (74) sont maintenus au niveau de leurs extrémités par des plaques d'extrémité (58) qui, en même temps, limitent l'ouverture d'entrée (40) ou l'entrée de sortie (38)

4. Séparateur de liquide selon l'une des revendications 1, 2, ou 3, caractérisé en ce que les profils (74) sont maintenus par la plaque de base ou la plaque de couverture (26, 30).

5. Séparateur de liquide selon l'une des revendications 1, 2, 3 ou 4, caractérisé en ce que de la surface de la plaque de couverture (30) délimitant le conduit partent des parties saillantes (82) qui coupent la direction d'écoulement.

6. Séparateur de liquide selon une des revendications 1 à 5, caractérisé en ce que la surface de la plaque de base (26) qui délimite le conduit (22) parcouru par le courant comporte, au moins dans la zone d'ouvertures de passage situées à proximité de l'ouverture de sortie (38), des parties saillantes qui partent de la surface vers l'intérieur et coupent la direction d'écoulement du courant.

7. Séparateur de liquide selon l'une des revendications 4 ou 5, caractérisé en ce que les parties saillantes sont constituées par des parois intermédiaires qui sont orientées parallèlement ou perpendiculairement à l'axe du séparateur de liquide.

8. Séparateur de liquide selon les revendications 5, 6 ou 7, caractérisé en ce que les profils (74) présentent des parties découpées pour l'engagement des parties saillantes (82).

9. Séparateur de liquide selon une des revendications 1 à 8, caractérisé en ce que les ouvertures de passage (42, 44, 46, 48) sont des alésages ronds et que le dispositif comporte, au niveau des ouvertures de passage, des tubulures de trop-plein (84) ayant une forme en U et débouchant dans l'enceinte collectrice (32) pour la réalisation d'une colonne de liquide de trop-plein de hauteur $\triangle H$.

10. Séparateur de liquide selon la revendication (9) caractérisé en ce que, pour les ouvertures de passage situées au début du conduit d'écoulement du courant, $\triangle H_n$ ( n = 1, 2, 3...) est plus grande qu'à l'extrémité du conduit d'écoulement du courant, ce qui s'exprime de préférence sous la forme $\triangle P_n = q \times g \triangle H_n$, $P_2 - P_1 = \triangle P$ représentant la différence de pression d'écoulement entre l'ouverture de passage en question (42, 44, 46) et la dernière ouverture de passage (48) située à l'extrémité du conduit du courant, q étant le poids spécifique du liquide qui est séparé et g étant l'accélération de la pesanteur.

11. Séparateur de liquide selon une des revendications 1 à 10, caractérisé en ce que les parois latérales du conduit du courant sont constituées par des profils (74).

12. Séparateur de liquide selon une des revendications 1 à 11, dans lequel le conduit d'écoulement (22) se raccorde, au début et/ou à la fin (38), à un entonnoir (76, ou 78) qui débouche dans un tube de raccordement ou un dispositif analogue, caractérisé en ce que le conduit d'écoulement (22) ne présente qu'une section d'écoulement légèrement supérieure à celles de l'entonnoir (76, 78) et du tube de raccordement.

13. Séparateur de liquide selon une des revendications 1 à 8, 11 ou 12, caractérisé en ce que l'enceinte sous pression qui constitue l'enceinte collectrice (32) comporte un raccord tubulaire (90) qui communique par l'intermédiaire d'une liaison tubulaire (88) avec un autre raccord tubulaire (92) qui est monté, dans le tube de raccordement (43) commençant au niveau de la sortie (38), à un emplacement suffisamment éloigné pour qu'entre la sortie (38) et l'autre raccord tubulaire (92) la résistance à l'écoulement provoque une chute de pression égale ou supérieure à la chute de pression existant entre les ouvertures de passage (42) situées au début d'écoulement (22) et les ouvertures de passage (48) situées à l'extrémité du conduit d'écoulement (22).

14. Séparateur de liquide selon une des revendications 1 à 8, 11 ou 12, caractérisé en ce qu'en arrière de la sortie (38) le dispositif comporte une ouverture de passage en dérivation (94) qui s'ouvre dans le conduit d'écoulement et qui a une section supérieure à la somme de toutes les ouvertures de passage en dérivation (42, 44, 46, 48) qui s'ouvrent dans l'enceinte collectrice (32).

15. Séparateur de liquide selon une des revendications 1 à 14, caractérisé en ce que les profils (74) sont en métal, de préférence en aluminium, et que les autres éléments de construction qui délimitent le conduit d'écoulement sont en métal ou en matière plastique, de préférence en chlorure de polyvinyle gris (PVC).

16. Séparateur de liquide selon la revendication 15, caractérisé en ce que les parois intermédiaires (82, 182) sont enfoncées de manière à assurer l'étanchéité aux liquides au niveau des parties découpées dans les profils (74).

17. Séparateur de liquide selon l'une des revendications 15 ou 16, caractérisé en ce que les bords de profils (74) qui viennent au contact du front (26) et du couvercle (24) sont assemblés par collage aux parois de ces éléments.

18. Séparateur de liquide selon l'une des revendications 15, 16 ou 17, caractérisé en ce que les parois intermédiaires (82, 182) dont le côté frontal est au contact du fond ou du couvercle (26, 30) sont assemblées par collage aux parois de ces éléments.

19. Séparateur de liquide selon une des revendications 2 à 18, caractérisé en ce que l'entonnoir (41, 78) forme, au moins dans la zone de l'ouverture d'entrée un cône intérieur qui se raccorde à la section de passage libre (177) du conduit d'écoulement formé par les profils (74).

20. Séparateur de liquide selon une des revendications 12 à 19, caractérisé en ce que, dans la zone de l'ouverture d'entrée, l'entonnoir (176) constitue un diffuseur et forme un cône dont l'angle $\alpha$ rapporté à l'axe de l'entonnoir ne dépasse pas une valeur choisie de telle manière que la diffusion ne provoque encore aucune rupture d'écoulement.

21. Séparateur de liquide selon une des revendications 2 à 20, caractérisé en ce que l'enceinte sous pression est en tôle d'acier, a de préférence une section ronde et, à l'entrée et à la sortie, se raccorde à un fond (71, 73) qui est hermétiquement soudé à des tubes de raccordement (41, 43) constitués également par de la tôle d'acier ou des tubes d'acier.

22. Séparateur de liquide selon une des revendications 12 à 21, caractérisé en ce que l'entonnoir (176) est en matière plastique, de préférence en chlorure de polyvinyle, et réalisé par projection ou par emboutissage profond et comporte une bride (179) qui est collée aux bords frontaux voisins du fond et du couvercle (26, 30) ou à des bandes saillantes (182) ou profils (74).

23. Séparateur de liquide selon une des revendications 1 à 22, caractérisé en ce que les parois intermédiaires 182 réalisent un contact presque hermétique aux gaz avec les extrémités voisines (219, 223) des rainures de capture pour empêcher la formation de tourbillons transversaux.

Fig. 1.

Fig. 9.

Fig.2.

EP 0 330 704 B1

Fig.3.

EP 0 330 704 B1

Fig. 4.

Fig.5

Fig. 7.

Fig. 6.

Fig. 8.

Fig.10.

Fig.12.

Fig.11.

$F = nC \cdot A$

**Fig.14.**

**Fig.13.**